# EUROPÄISCHE PATENTANMELDUNG

(11) **EP 1 990 994 A2**
(43) Veröffentlichungstag der Anmeldung: **12.11.2008**
(21) Anmeldenummer: 08155090.7
(22) Anmeldetag: 24.04.2008
(51) Int. Cl.: H04N 5/64

(54) **Gehäuse eines Gerätes der Unterhaltungselektronik**

(30) Priorität: 08.05.2007 AT 7052007
(71) Anmelder: ROBUST Electronics GmbH, 1220 Wien (AT)
(72) Erfinder: Voegerle, Thomas, 1070 Wien (AT)
(74) Vertreter: Pröll, Jürgen

(57) **Zusammenfassung**

Die vorliegende Erfindung betrifft ein Gehäuse eines Gerätes der Unterhaltungselektronik in dessen Vorderfront eine kammartige Struktur angeordnet ist.

## Beschreibung

Die vorliegende Erfindung betrifft ein Gehäuse eines Gerätes der Unterhaltungselektronik mit den Merkmalen des Patentanspruches 1. Diverse Gehäuse für Geräte der Unterhaltungselektronik sind bekannt. So sind verschiedene Gehäuse für Fernsehgeräte auf dem Markt. In letzter Zeit haben sich TV-Geräte mit flachen Bildschirmen, so genannte Flat-TV's, am Markt etabliert.

Aus DE-A1- 23 61 705 ist ein Baukastensystem für die Bedienteile einer Typenreihe von Fernsehgeräten bekannt. Das Baukastensystem besteht aus einzelnen Bausteinen, die jeweils Bedienungselemente für Senderwahl, für Bild- und Toneinstellung, für Festsenderprogrammierung und/oder Anordnungen für Anzeigen und Rückmeldungen und/oder Anschlussbuchsen für akustische bzw. audiovisuelle Zusatzgeräte enthalten. Die Bausteine bestehen aus einem Frontplattenteil, das die jeweilig verschiedenen Bedienungselemente bzw. Anordnungen zum Anzeigen und Rückmelden sowie Anschlussbuchsen trägt, und einem etwas zurückstehenden umlaufenden Rahmen. Die Bausteine sind gleich groß sind und haben eine rechteckige Form mit einem Seitenverhältnis 2:1. Die Seitenwände des Rahmens besitzen Mittel zur gegenseitigen Positionierung und Befestigung der Bausteine untereinander.

Aus GB-A- 749 183 ist ein Gehäuse eines TV-Gerätes bekannt. Dieses Gehäuse weist an der Frontseite Einschnitte auf, hinter denen Lautsprecher angeordnet sind. Die Einschnitte haben Durchbrüche durch das Gehäuse, damit die vom Lautsprecher abgegebenen Schallwellen nach außen dringen können.

Nachteilig bei sämtlichen bekannten Geräten und zugehörigen Gehäusen ist jedoch, dass das Design und das Aussehen des Gehäuses im Nachhinein durch einen Kunden nicht mehr ab- bzw. veränderbar ist. Abänderungen von Gehäusen in der Fertigung sind sehr kostenaufwendig. Es gibt daher aktuell kaum Möglichkeiten durch einfache Maßnahmen ein Gehäuse eines Gerätes der Unterhaltungselektronik, insbesondere eines TV-Gerätes, nach der Produktion noch in seinem Aussehen zu verändern bzw. dieses zu beeinflussen. Dies hat zur Folge, dass ein Gerät der Unterhaltungselektronik nach der Herstellung nicht mehr gestalterisch individualisierbar ist, sondern eben in der Weise, wie es produziert ist, in den Markt gelangt und dann beim Kunden steht.

Aufgabe der vorliegenden Erfindung ist es, ein Gehäuse für ein Gerät der Unterhaltungselektronik aufzuzeigen, welches mit einfachen Mitteln in seinem Aussehen und in seiner Funktionsvielfalt, auch nach der Herstellung, variierbar ist, ohne das gesamte fertige Gehäuse austauschen zu müssen oder durch Eingriffe in das Gehäuse das Gehäuse in der Substanz selbst anzutasten.

Diese Aufgabe wird anhand der Merkmale des Patentanspruches 1 gelöst.

Weitere vorteilhafte Ausgestaltungen der Erfindung ergeben sich anhand der abhängigen Ansprüche sowie der weiteren Beschreibung und der beigefügten Figuren.

Das Gehäuse des Gerätes der Unterhaltungselektronik zeichnet sich dadurch aus, dass das Gehäuse mindestens eine zusammenhängende Struktur von mindestens zwei parallel verlaufenden Nuten aufweist.
Vorteilhaft hierbei ist, dass die Nuten in die Vorderfront des Gehäuses eingebracht sind wobei die Breite der Nuten und deren Tiefe variierbar sind. Dadurch kann in der Ausgestaltungsform des Gehäuses variiert werden. Bevorzugt ist außerdem, dass die Nuten eine Art kammartige Struktur ergeben. Vorteilhaft ist außerdem, dass über die kammartige Struktur externe Elemente mit dem Gehäuse verbindbar sind. Dies ermöglicht es an das Gehäuse Teile anzubinden oder dort anzubringen. Weiterhin können die externen Elemente mit der kammartigen Struktur verklemmt und/oder verklebt werden oder sind von der Seite in diese einschiebbar.
Die externen Elemente weisen auf der Rückseite ein Profil aufweisen, mittels dessen die Verbindung mit der kammartigen Struktur erfolgt. Auf diese Weise können die externen Elemente einfach mit dem Gehäuse verbunden werden.

Vorteilhaft gemäß der Ausführungsform des Gehäuses nach Anspruch 2 ist, dass die Nuten äquidistant zueinander angeordnet sind und eine gleiche Breite und Tiefe aufweisen. Dies erzeugt ein harmonisches Aussehen des Gehäuses.

Gemäß der Ausführung nach Anspruch 3 ist bevorzugt, dass die Nuten der kammartigen Struktur rechteckig oder rund oder dreieckig oder oval ausgeführt sind.

Gemäß der Ausführung nach Anspruch 4 ist bevorzugt, dass die kammartige Struktur parallel zu mindestens einer Kante des Gehäuses des Gerätes der Unterhaltungselektronik verläuft.

Gemäß der Ausführungsform nach Anspruch 5 handelt es sich bei den externen Elementen um Lautsprecher, Ablagen, insbesondere für eine Fernbedienung oder um Design- oder Dekorleisten oder Design- oder Dekorelemente.

Vorteilhaft gemäß der Ausführungsform des Gehäuses nach Anspruch 6 ist, dass die kammartige Struktur als Schattenfuge bei der Lackierung des Gehäuses dienen kann. Auf diese Weise wird ein Lackieren des Gehäuses mit unterschiedlichen Lacken vereinfacht.

Vorteilhaft gemäß der Ausführungsform des Gehäuses nach Anspruch 7 ist, dass beim Lackieren mit unterschiedlichen Lacken in einer Vertiefung der Vertiefungen der kammartigen Struktur der Übergang zwischen zwei Lacken vorgenommen wird. Somit ist der Lackübergang für einen Nutzer nicht sichtbar.

Vorteilhaft gemäß der Ausführungsform des Gehäuses nach Anspruch 8 ist, dass in den Vertiefungen elektrische Kontaktstellen angeordnet sind, welche von den externen Elementen kontaktierbar sind. Somit können Kontakte bereitgestellt werden, welche relativ berührungssicher sind.

Vorteilhaft gemäß der Ausführungsform des Gehäuses nach Anspruch 9 ist die kammartige Struktur mindestens an der Vorderfront des Gehäuses und/oder mindestens an einer der Seitenflächen des Gehäuses angeordnet. Somit können externe Elemente an jeder Seite des Gehäuses angebracht werden.

Vorteilhaft gemäß der Ausführungsform des Gehäuses nach Anspruch 10 ist, dass die kammartige Struktur zur optischen Abgrenzung dient und vorzugsweise die optische Abgrenzung der Bildanzeigevorrichtung der Vorderfront des Gehäuses vornimmt. Somit kann eine visuelle Trennung zwischen den einzelnen Bereichen des Gehäuses vorgenommen werden.

Gemäß der Ausführungsform nach Anspruch 11 sind die Design- oder Dekorleisten oder Design- oder Dekorelemente farbig.

Gemäß der Ausführungsform nach Anspruch 12 bestehen die Design- oder Dekorleisten oder Design- oder Dekorelemente aus verschiedenen Werkstoffen oder sind verschiedenen Oberflächenbehandlungen unterzogen.

Die Erfindung wird im Weiteren anhand eines konkreten Ausführungsbeispiels anhand von Figuren anhand eines TV-Gerätes näher beschrieben. Es handelt sich hier jedoch nur um eine beispielhafte Beschreibung anhand eines konkreten Ausführungsbeispieles, sodass keine Einschränkung der Erfindung auf dieses konkrete Ausführungsbeispiel erfolgt.

Es zeigen:
- FIG 1: eine Frontansicht eines TV-Gerätes mit einem erfindungsgemäßen Gehäuse;
- FIG 2: eine perspektivische Ansicht eines TV-Gerätes mit einem erfindungsgemäßen Gehäuse;
- FIG 3 bis 6: zeigen Ausschnitte von Schnitten durch ein erfindungsgemäßes Gehäuse.

In den einzelnen Figuren sind die Bezugszeichen für identische Elemente in jeder Figur identisch. Dies erleichtert das Verständnis der Beschreibung anhand der Figuren.

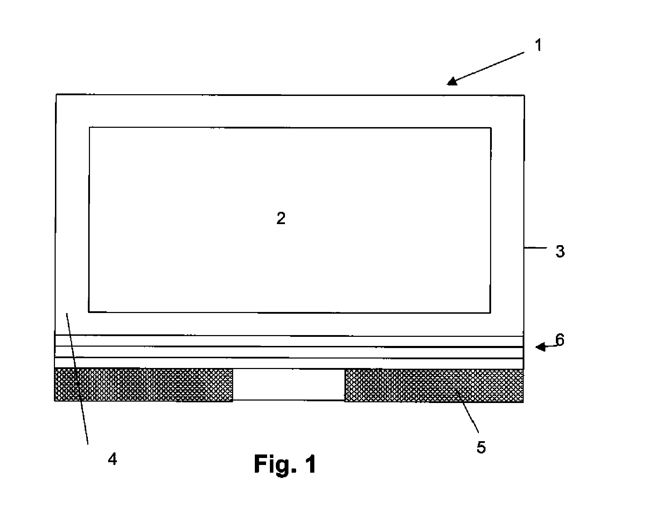

In FIG 1 ist eine Frontansicht eines TV-Gerätes 1 dargestellt. Das TV-Gerät 1 weist eine Bilddarstellungsvorrichtung 2 und ein Gehäuse 3 auf. In der Vorderfront 4 des Gehäuses 3 sind mehrere Strukturen 5, 6 vorhanden. Diese Strukturen 5 und 6 sind in die Vorderfront 4 das Gehäuse 3 eingebracht. Bei der Struktur 5 handelt es sich beispielsweise um eine Struktur mit Löchern, welche in das Gehäuse 3 an der Vorderfront 4 eingebracht sind. Vorzugsweise befinden sich hinter dieser Struktur 5 Hohlräume im Gehäuse 3, in welche beispielsweise die Lautsprecher für die Tonwiedergabe einbaubar sind. Die Löcher in der Struktur 5 dienen dazu, dass über die Lautsprecher die Schallsignale relativ ungehindert abstrahlbar sind. Zugleich werden die Lautsprecher aber hinter der Struktur 5 visuell versteckt und die Vorderfront 4 des Gehäuses 3 erhält eine strukturierte Form.

Bei der Struktur 6 handelt es sich um eine zusammenhängende Struktur von mindestens zwei parallel verlaufenden Nuten. Diese Nuten sind in die Vorderfront 4 des Gehäuses 3 eingebracht. Die Breite der Nuten und deren Tiefe ins Gehäuse 3 können unterschiedlich sein. In vorzugsweiser Ausgestaltung der Erfindung sind die Nuten jedoch äquidistant zueinander und von gleicher Breite und Tiefe. Um eine gestalterisch optimierte Ausführung zu erreichen, werden die Nuten jedoch zumeist in gleichem Abstand zueinander und in gleicher Breite ausgeführt. Die Nuten ergeben eine Art kammartige Struktur 6, welche in das Gehäuse 3 eingebracht ist. Die Nuten der kammartigen Struktur 6 können rechteckig, rund, dreieckig, oval oder in jeder anderen Ausgestaltungsform ausgeführt sein. Diese kammartige Struktur 6 dient mehreren Zwecken. Zum einen kann mittels der kammartigen Struktur 6 eine Durchbrechung der Gehäusevorderfront 4 in optischer Weise erfolgen und mittels der Struktur 6 erfolgt zugleich eine Abgrenzung zwischen dem Bilddarstellungsbereich und dem Bedienbereich, wie dem Audioausgabebereich. Der Bilddarstellungsbereich ist vorrangig und in erster Linie von der Bilddarstellungsvorrichtung 2 geprägt. Der Audioausgabebereich vorrangig von der lochartigen Struktur 5. Die kammartige Struktur 6 dient im Weiteren auch zur Aufnahme einer in FIG 1. nicht dargestellten Leiste, welche in die kammartige Struktur 6 einfügbar ist. In vorzugsweiser Ausführung ist die kammartige Struktur 6 derartig ausgeführt, dass die kammartige Struktur 6 eine Art U-Profil aufweist. In dieses U-Profil kann eine Dekorleiste, welche eine Negativstruktur bzw. eine zur kammartigen Struktur 6 konträre Bauweise aufweist, eingefügt werden. Somit fügt sich eine Dekorleiste oder Designleiste, welche die Kontur der kammartigen Struktur 6 aufnimmt, in das TV-Gerät 1 nahezu nahtlos ein.
Durch das Einfügen einer Designleiste in die kammartige Struktur 6 können somit optische Veränderungen des Gesamteindrucks des TV-Gerätes 1 ermöglicht werden.

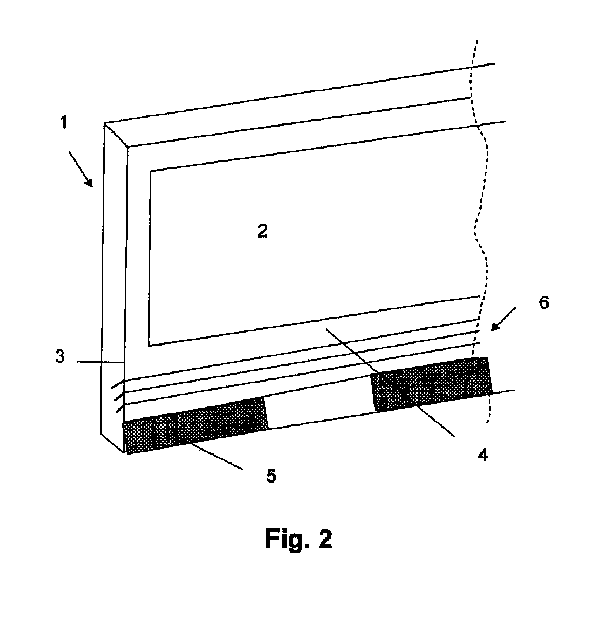

In FIG 2 ist das TV-Gerät 1 in Teilansicht perspektivisch dargestellt. Auch hier ist die kammartige Struktur 6 gut zu erkennen. Es ist ersichtlich, dass die kammartige Struktur 6 mit ihren Erhebungen plan mit der Oberfläche der Vorderfront 4 des Gehäuses 3 abschließt. Die kammartige Struktur 6 ist zwischen der Bilddarstellungsvorrichtung 2 und der lochartigen Struktur 5 angeordnet und erstreckt sich nahezu über die gesamte Breite der Vorderfront 4. Wird nunmehr in die kammartige Struktur 6 eine Dekorleiste eingebracht, so schließt diese ebenfalls nahezu plan mit der Oberfläche des Gehäuses 3 auf der Vorderfront 4 ab.
Durch eine geschickte farbliche Gestaltung der Dekor- oder Designleiste, welche in die kammartige Struktur 6 eingebracht wird, kann somit eine optische Trennung erfolgen. Durch die Einbringung einer derartigen Leiste in die kammartige Struktur 6 in der Vorderfront 4 kann das Aussehen des TV-Gerätes 1 in seiner optischen Wirkung auf einen Benutzer verändert werden.

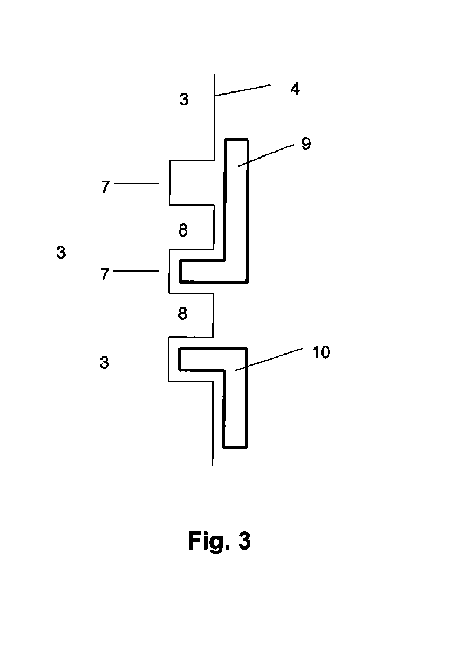

In FIG 3 ist ein Ausschnitt eines Schnitts durch das Gehäuse 3 im Bereich der kammartigen Struktur 6 schematisch dargestellt. Die kammartige Struktur 6 weist Vertiefungen 7 und Erhöhungen 8 auf. Die Erhöhungen 8 sind derartig gewählt, dass sie faktisch mit der Vorderfront 4 des Gehäuses 3 plan abschließen. Die Vertiefungen 7 sind derartig gewählt, dass die Stabilität des Gehäuses 3 nicht beeinflusst wird und dennoch ausreichende Vertiefung gegeben ist. In Fig. 3 sind zwei Designleisten 9, 10 angeordnet. Beide Designleisten 9 und 10 weisen auf der Rückseite ein Profil auf, das es ermöglicht die Designleisten 9, 10 in die kammartige Vorrichtung 6 einzuführen. Das Profil der Designleisten 9 und 10 ist derartig ausgestaltet, dass es in die kammartige Struktur 6, in deren Vertiefungen 7, einführbar ist. In vorzugsweiser Ausgestaltung der Erfindung wird das Profil der Designleiten 9, 10 in die Vertiefungen 7, zwischen die Erhöhungen 8 und ggf. das Gehäuse 3 eingehängt oder eingeklemmt.
Auf diese Weise kann somit das Aussehen des TV-Gerätes durch Einbringung von Designleisten 9, 10 in die kammartige Struktur 6 im Nachhinein verändert werden.

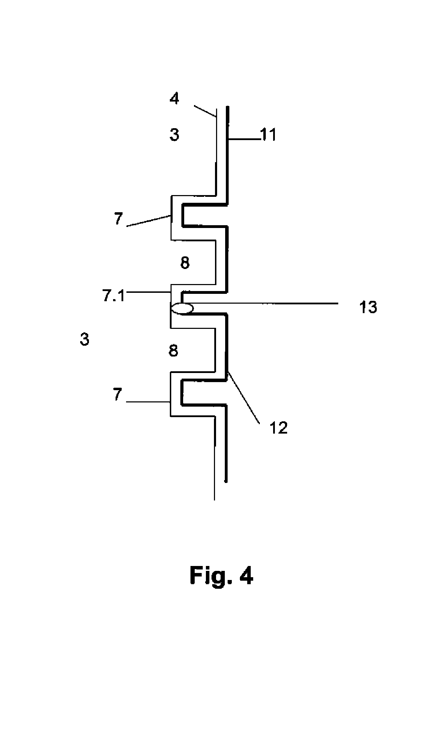

In FIG 4 ist eine andere Verwendung der kammartigen Struktur 6 dargestellt. Hier wird die kammartige Struktur 6, insbesondere deren Vertiefungen 7, bzw. eine der Vertiefungen 7, im vorliegenden Fall die Vertiefung 7.1, als Schattenfuge verwendet. Diese Verwendung erfolgt bei der Herstellung des TV-Gerätes 1, indem das Gehäuse 3 mit zwei unterschiedlichen Lacken und somit unterschiedlichen Farben lackiert wird. Zunächst wird das Gehäuse 3 zumindest bis zur kammartigen Struktur 6 mit einem ersten Lack 11 lackiert. Im vorliegenden Fall bis zur Vertiefung 7.1. Anschließend wird der dann noch nicht lackierte Teil des Gehäuses 3 mit einem zweiten Lack 12 lackiert. Der Farbübergang erfolgt in einem Bereich 13 in der Vertiefung 7.1 der kammartigen Struktur 6. Auf diese Weise sind die Lackiervorgänge vereinfacht und die Lackübergänge verschwinden faktisch in der kammartigen Struktur 6 unsichtbar für einen Nutzer.
Es besteht aber auch die Möglichkeit das Gehäuse 3 zunächst mit dem ersten Lack 11 über die kammartige Struktur 6 hinaus zu lackieren und dann erst den zweiten Lack 12 aufzubringen, eben bis zur Vertiefung 7.1.

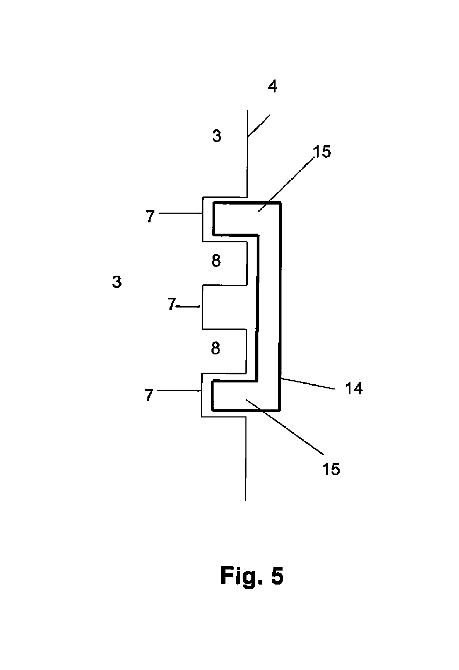

In FIG. 5 ist eine weitere Ausgestaltung und Verwendung der kammartigen Struktur 6 im Gehäuse 3 aufgezeigt. Hier wird nunmehr über die gesamte kammartige Struktur 6 eine Designleiste 14 eingebracht. Dies erfolgt in der Weise, dass die Designleiste 14 zumindest mit einem Profil 15, welches sich an der Rückseite der Designleiste 14 befindet, in mindestens eine der Vertiefungen 7 der kammartigen Struktur 6 eingebracht wird.
Die Designleiste 14 weist hierzu das Profil 15 auf, welches zumindest in eine der Vertiefungen 7 der kammartigen Struktur 6 einbringbar ist. In einer weiteren Ausgestaltung der Erfindung kann eine Klemmung des Profils in der Vertiefung 7 erfolgen. Es kann aber auch zusätzlich eine Klebung vorgenommen werden.

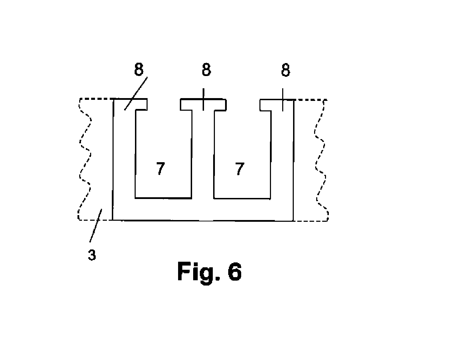

In FIG. 6 ist eine weitere konstruktive Ausgestaltung der kammartigen Struktur 6 dargestellt, welche in das Gehäuse 3 eingebracht ist. In FIG. 6 sind die Erhöhungen 8 T-förmig ausgestaltet. Die Erhöhungen weisen am oberen Ende Verbreiterungen auf. Bringt man nunmehr eine Dekorleiste, welche eine negative Form zur kammartigen Struktur 6 aufweist dort ein, so kann diese beispielsweise von der Seite in das Gehäuse 3 in die kammartige Struktur 6 eingeschoben werden und ermöglicht somit faktisch ein planes Abschließen.

In einer weiteren Ausgestaltung der Erfindung sind am Gehäuse 3 mehrere kammartige Strukturen 6 vorhanden. Diese laufen mindestens in einer Ebene zueinander parallel. Auf diese Weise kann das Gehäuse 3 in mehrere optische Bereiche mittels Designleisten aufgeteilt werden. In einer weiteren Ausgestaltung der Erfindung ist vorgesehen, dass jeweils am Rande des Gehäuses 3, vorzugsweise in dessen Frontbereich 4, senkrecht zueinander stehende kammartige Strukturen 4 angeordnet sind. Somit ist es möglich, bei entsprechender Anpassung der in die kammartige Struktur 6 einzubringenden Designleisten, das gesamte Gehäuse 3 in seinem farblichen Aussehen, wie auch in seinem Design, zu beeinflussen. Hierbei kann insbesondere die Designleiste eine besondere Farbgestaltung aufweisen, wie aber auch eine besondere Form. Somit kann das Gehäuse 3, ohne Eingriff in das Gehäuse 3 selbst, lediglich durch Aufbringung von derartigen Designleisten im Aussehen verändert werden.

Die Designleisten werden entweder eingeschoben, eingeklemmt, eingeclipst oder aber auch eingeklebt, wobei beim Einkleben ein Trennen zu einem späteren Zeitpunkt nur noch schwer möglich ist.

Durch die erfindungsgemäße kammartige Struktur 6 im Gehäuse 3 eines Gerätes 1 ist es auf überraschend einfache Art und Weise möglich, ein universelles Gehäuse für ein Gerät herzustellen und dieses durch Anbringung entsprechender Leisten oder durch nachfolgende Lackierung optisch zu verändern.

In einer weiteren Ausgestaltungsform der Erfindung dient die kammartige Struktur 6 zur Aufnahme von Anordnungen, welche in die kammartige Struktur 6 einbringbar oder mit dieser verbindbar sind. So hat es sich als vorteilhaft erwiesen z.B. über die kammartige Struktur 6 Schalen zur Aufnahme der Fernbedienung des TV-Gerätes 1 am Gehäuse 3 anzubringen. Weiterhin hat es sich als vorteilhaft erwiesen externe Lautsprecher an das Gehäuse 3 über die kammartige Struktur 6 zu befestigen. Bei der Anbringung von Lautsprechern kann in den Vertiefungen 7 ein elektrischer Kontakt angeordnet sein, welcher vom Lautsprecher kontaktiert wird, wenn dieser in die kammartige Struktur 6 eingebracht wird. Über diesen Kontakt bzw. diese Kontakte oder Kontaktflächen können die Audiosignale an den externen Lautsprecher geleitet werden. Es wird so eine Verkabelung umgangen. Bei Schalen für Fernbedienungen hat es sich als vorteilhaft erwiesen in den Schalen Kontaktstellen einzufügen, über welche die Fernbedienung bzw. in dieser vorhandene Energiespeicher geladen werden.

## Patentansprüche

1. Gehäuse (3) eines Gerätes der Unterhaltungselektronik (1), welches in der Vorderfront (4) des Gehäuses (3) mindestens eine zusammenhängende Struktur (6) von mindestens zwei parallel verlaufenden Nuten aufweist, deren Breite und/oder Tiefe variierbar sind,
**dadurch gekennzeichnet, dass**
die Nuten eine Art kammartige Struktur (6) bilden über welche externe Elemente (9, 10, 14) mit dem Gehäuse (3) verbindbar sind, indem die externen Elemente (9, 10, 14) auf ihrer Rückseite ein Profil aufweisen, mittels dessen die externen Elemente (9, 10, 14) mit der kammartigen Struktur (6) verklemmbar und/oder verklebbar und/oder von einer Kante der Vorderfront (4) in die kammartige Struktur (6) einschiebbar sind.

2. Gehäuse (3) nach Anspruch 1,
**dadurch gekennzeichnet, dass**
die Nuten äquidistant zueinander angeordnet sind und eine gleiche Breite und Tiefe aufweisen.

3. Gehäuse (3) nach Anspruch 1 oder 2,
**dadurch gekennzeichnet, dass**
die Nuten der kammartigen Struktur (6) rechteckig oder rund oder dreieckig oder oval oder in jeder anderen Ausgestaltungsform ausgeführt sind.

4. Gehäuse (3) nach einem oder mehreren der vorangehenden Ansprüche,
**dadurch gekennzeichnet, dass**
die kammartige Struktur (6) parallel zu mindestens einer Kante des Gehäuses (3) des Gerätes der Unterhaltungselektronik (1) verläuft.

5. Gehäuse (3) nach einem oder mehreren der vorangehenden Ansprüche,
**dadurch gekennzeichnet, dass**
die externen Elemente (9, 10, 14) Lautsprecher, Ablagen, insbesondere für eine Fernbedienung oder Design- oder Dekorleisten oder Design- oder
Dekorelemente sind.

6. Gehäuse (3) nach einem oder mehreren der vorangehenden Ansprüche,
**dadurch gekennzeichnet, dass**
die kammartige Struktur (6) als Schattenfuge bei der Lackierung des Gehäuses (3) dient.

7. Gehäuse (3) nach Anspruch 6,
**dadurch gekennzeichnet, dass**
in einer Vertiefung (7.1) der Vertiefungen (7) der kammartigen Struktur (6) der Übergang zwischen zwei Lacken erfolgt.

8. Gehäuse (3) nach einem oder mehreren der vorangehenden Ansprüche,
**dadurch gekennzeichnet, dass**
in den Vertiefungen (7) elektrische Kontaktstellen angeordnet sind, welche von den externen Elementen (9, 10, 14) kontaktierbar sind.

9. Gehäuse (3) nach einem oder mehreren der vorangehenden Ansprüche,
**dadurch gekennzeichnet, dass**
die kammartige Struktur (6) mindestens an der Vorderfront (4) des Gehäuses (3) und/oder mindestens an einer der Seitenflächen des Gehäuses (3) angeordnet ist.

10. Gehäuse (3) nach einem oder mehreren der vorangehenden Ansprüche,
**dadurch gekennzeichnet, dass**
die kammartige Struktur (6) zur optischen Abgrenzung dient und vorzugsweise die optische Abgrenzung der Bildanzeigevorrichtung (2) an der Vorderfront (4) des Gehäuses (3) vornimmt.

11. Gehäuse (3) nach Anspruch 5,
**dadurch gekennzeichnet, dass**
die Design- oder Dekorleisten oder Design- oder Dekorelemente farbig sind.

12. Gehäuse (3) nach einem oder mehreren der Ansprüche 5 oder 11,
**dadurch gekennzeichnet, dass**
die Design- oder Dekorleisten oder Design- oder Dekorelemente aus verschiedenen Werkstoffen bestehen oder verschiedenen Oberflächenbehandlungen unterliegen.

13. Gehäuse (3) nach Anspruch 12,
**dadurch gekennzeichnet, dass**
als Werkstoff Metal, Kunststoff oder Holz dient.

14. Gehäuse (3) nach Anspruch 12,
**dadurch gekennzeichnet, dass**
die Oberflächenbehandlung eine Verchromung, Eloxierung oder Lackierung ist.
